# EUROPEAN PATENT APPLICATION

(11) **EP 3 190 563 A1**
(43) Date of publication of application: **12.07.2017**
(21) Application number: 15838514.6
(22) Date of filing: 07.09.2015
(51) Int. Cl.: G06Q 50/30

(54) **MESSAGE SERVICE METHOD USING CHARACTER, USER TERMINAL FOR PERFORMING SAME, AND MESSAGE APPLICATION INCLUDING SAME**

(30) Priority: 05.09.2014 KR 20140119018
(71) Applicant: Seo, Yong Chang, Seoul 03633 (KR)
(72) Inventor: Seo, Yong Chang, Seoul 03633 (KR)
(74) Representative: Gill Jennings & Every LLP
(86) International application number: PCT/KR2015/009402
(87) International publication number: WO 2016/036218

(57) **Abstract**

A message service method using a character, a user terminal for performing the same, and a message application including the same are disclosed. The message service method comprises the steps of: identifying a chat mode related to a method of expressing the contents of a chat; and displaying, in a chat room, the contents of a chat between a user terminal and a counterpart terminal according to the chat mode, wherein the chat mode may include a first chat mode in which 3D characters corresponding to the user terminal and the counterpart terminal are used, and a second chat mode in which the 3D characters are not used.

## Description

### Technical Field

Embodiments of the present invention relate to a message service method, and more particularly, to a method of more intuitively expressing contents of a chat between a user device and a counterpart device using two-dimensional (2D) or three-dimensional (3D) characters.

### Background Art

In general, an existing message service two-dimensionally displays contents of a chat simply through a text, an image, or a video. However, with the introduction of various types of message services, a function to induce interest of a user is requested in addition to the original message function. Further, an entity providing a message service also requires a method of creating separate profits through a message.

### Disclosure of Invention

### Technical Goals

An aspect of the present invention provides a message service method that may arouse interest of a user by providing a chat mode in which contents of a chat is expressed through a three-dimensional (3D) character.

Another aspect of the present invention also provides a message service method that may enable a user to chat through a unique character of the user by replacing an emotion, a motion, or accessories of a 3D character through selection of a character sticker.

### Technical solutions

According to an aspect of the present invention, there is provided a message service method performed by a user device, the message service method including identifying a chat mode related to a method of expressing contents of a chat, and displaying, in a chat room, contents of a chat between the user device and a counterpart device based on the chat mode, wherein the chat mode may include a first chat mode in which three-dimensional (3D) characters corresponding to the user device and the counterpart device are used, and a second chat mode in which the 3D characters are not used. In the other words, a 3D character of the user device and a 3D character of the counterpart device are chatting in the chat window in first chat mode. And, a 2D character of the user device and a 2D character of the counterpart device are chatting in the chat window in second chat mode. The 3D character is able to behave as real. Specially, at least one of an expression, a behavior, a pose, a gesture, a face, a costume, or an appearance of 3D character is changed when the 3D character is waiting, the message is transmitted or received via the 3D character, or an visual effect is applied to the 3D character.

The displaying may include providing, in the first chat mode, an interface including a character sticker related to a visual effect to be applied to the 3D characters, or providing, in the second chat mode, an interface including a character sticker related to a visual effect applied to two-dimensional (2D) characters associated with the 3D characters.

The displaying may include applying, in the first chat mode, a visual effect corresponding to a selected character sticker to a 3D character in the chat room, and displaying, in the second chat mode, the selected character sticker in the chat room.

The character sticker may be added or updated based on identification information or image information of a character, and may be selected by a user from character stickers provided through the interface or selected when the user inputs a combination of at least one of a word, a number, or a symbol corresponding to the character sticker into a chat input box. Here, the word may include a single letter or a plurality of letters, and may be expressed in various languages such as Korean, English, Japanese, and Chinese. For example, a character sticker related to an emotion of joy may be stored to be matched with a keyword such as "joy", "funny", or "^^".

The message service method may further include switching between the first chat mode and the second chat mode when a chat mode switching identifier displayed in the chat room is selected or a chat mode switching motion of a user is recognized, wherein the identifying may include identifying a new chat mode.

The displaying may include displaying the contents of the chat in a chat room with a background of a real image or a virtual image that is preset or determined based on selection of a user when the first chat mode is selected.

The message service method may further include storing the contents of the chat in the chat room when the user device and the counterpart device leave the chat room, displaying the 3D characters corresponding to the user device and the counterpart device and a replaying identifier based on a replaying request for the contents of the chat, and replaying the contents of the chat in a time order based on the first chat mode when the replaying identifier is selected.

The message service method may further include displaying a 3D character corresponding to the user device or the counterpart device based on a profile viewing request related to the user device or the counterpart device, and controlling the corresponding 3D character to describe personal information of the user device or the counterpart device or express a predetermined emotion or motion.

According to another aspect of the present invention, there is also provided a message application program for a message service method, the message application program stored in a medium of a user device and executed by a processor of the user device, the message application program including identifying a chat mode related to a method of expressing contents of a chat, and displaying, in a chat room, contents of a chat between the user device and a counterpart device based on the chat mode, wherein the chat mode may include a first chat mode in which 3D characters corresponding to the user device and the counterpart device are used, and a second chat mode in which the 3D characters are not used.

The displaying may include providing, in the first chat mode, an interface including a character sticker related to a visual effect to be applied to the 3D characters, or providing, in the second chat mode, an interface including a character sticker related to a visual effect applied to 2D characters associated with the 3D characters.

The displaying may include applying, in the first chat mode, a visual effect corresponding to a selected character sticker to a 3D character in the chat room, and displaying, in the second chat mode, the selected character sticker in the chat room.

The message application program may further include switching between the first chat mode and the second chat mode when an identifier displayed in the chat room is selected, wherein the identifying may include identifying a new chat mode.

The displaying may include displaying the contents of the chat in a chat room with a background of a real image or a virtual image that is preset or determined based on selection of a user when the first chat mode is selected.

The message application program may further include storing the contents of the chat in the chat room when the user device and the counterpart device leave the chat room, displaying the 3D characters corresponding to the user device and the counterpart device and a replaying identifier based on a replaying request for the contents of the chat, and replaying the contents of the chat in a time order based on the first chat mode when the replaying identifier is selected.

The message application program may further include displaying a 3D character corresponding to the user device or the counterpart device based on a profile viewing request related to the user device or the counterpart device, and controlling the corresponding 3D character to describe personal information of the user device or the counterpart device or express a predetermined emotion or motion.

According to still another aspect of the present invention, there is also provided a user device including a processor configured to identify a chat mode related to a method of expressing contents of a chat, and a display configured to display, in a chat room, contents of a chat between the user device and a counterpart device based on the chat mode, wherein the chat mode may include a first chat mode in which 3D characters corresponding to the user device and the counterpart device are used, and a second chat mode in which the 3D characters are not used.

The chat mode may be switched between the first chat mode and the second chat mode when a chat mode switching identifier displayed in the chat room is selected or a chat mode switching motion of a user is recognized.

According to yet another aspect of the present invention, there is also provided a message service method performed by a user device, the message service method including displaying 3D characters in a chat room with a background of a real image or a virtual image based on a request for entry to the chat room, and displaying contents of a chat between the user device and a counterpart device using the 3D characters.

The displaying of the 3D characters may include displaying the 3D characters in the chat room when a pre-designated object or a motion of the object is sensed in the real image or the virtual image.

The message service method may further include switching a chat mode when a chat mode switching identifier displayed in the chat room is selected or a chat mode switching motion of a user is recognized, wherein the displaying may include displaying the contents of the chat without using the 3D characters based on a new chat mode.

The displaying may include providing an interface including a character sticker related to a visual effect to be applied to the 3D characters.

The character sticker may be added or updated based on identification information or image information of a character, and may be selected by a user from character stickers provided through the interface or selected when the user inputs a combination of at least one of a word, a number, or a symbol corresponding to the character sticker into a chat input box.

According to further another aspect of the present invention, there is also provided a message application program for a message service method, the message application program stored in a medium of a user device and executed by a processor of the user device, the message application program including displaying 3D characters in a chat room with a background of a real image or a virtual image based on a request for entry to the chat room, and displaying contents of a chat between the user device and a counterpart device using the 3D characters.

### Advantageous Effects

According to an embodiment, it is possible to arouse interest of a user by providing a chat mode in which contents of a chat is expressed through a three-dimensional (3D) character.

According to an embodiment, it is possible to enable a user to chat through a unique character of the user by replacing an emotion, a motion, or accessories of a 3D character through selection of a character sticker.

### Brief Description of Drawings

FIG. 1 illustrates an overall configuration according to an embodiment.
FIG. 2 illustrates a process of selecting a chat mode according to an embodiment.
FIG. 3 illustrates a chat mode that represents a three-dimensional (3D) character using a marker according to an embodiment.
FIG. 4 illustrates a process of displaying contents of a chat using 3D characters according to an embodiment.
FIG. 5 illustrates a process of applying a visual effect to a 3D character according to an embodiment.
FIG. 6 illustrates a process of switching from a first chat mode to a second chat mode according to an embodiment.
FIG. 7 illustrates a process of switching from a second chat mode to a first chat mode according to an embodiment.
FIG. 8 illustrates a process of replaying contents of a chat according to an embodiment.

### Best Mode for Carrying Out the Invention

Hereinafter, reference will now be made in detail to embodiments of the present invention, examples of which are illustrated in the accompanying drawings, wherein like reference numerals refer to the like elements throughout. The embodiments are described below in order to explain the present invention by referring to the figures.

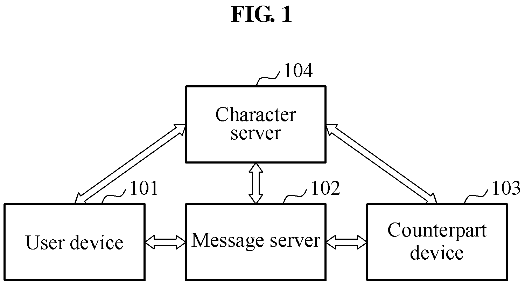

FIG. 1 illustrates an overall configuration according to an embodiment.

Referring to FIG. 1, a user device 101 and a counterpart device 103 may have a chat through a chat room created by a message server 102. Here, the user device 101 and the counterpart device 103 may each include a processor, a display, and a medium configured to store a message application program. The user device 101 and the counterpart device 103 may include all types of electronic devices configured to transmit and receive contents of a chat through a network. Herein, in a case in which a single counterpart device 103 is provided, the chat may be a 1:1 chat. In a case in which a plurality of counterpart devices 103 are provided, the chat may be a 1:N chat, for example, a group chat.

The user device 101 and the counterpart device 103 may display the chat room through a background image such as a real image or a virtual image. In this example, the background image may include an image captured in real time by the user device 101 or the counterpart device 103, or an image edited, processed, or newly created through computer work. The user device or the counterpart device 103 may operate through an interface displayed on the display or operate through an interface displayed in virtual reality.

The user device 101 or the counterpart device 103 may be a device that operates without being attached to a body part of a user, or a device that operates with being attached to a body part, for example, an arm, a hand, a head, or a body, of the user. A predetermined instruction may be input into the user device 101 or the counterpart device in response to a motion of a hand, an eye, or a body, or through a separate device such as a pen, a mouse, or a keyboard.

The user device 101 and the counterpart device 103 may each be a sending terminal or a receiving terminal depending on the development of a chat. Hereinafter, the description will be provided based on the user device 101, and the description of the user device 101 may also be applied to the counterpart device 103.

The user device 101 may identify a chat mode related to a method of expressing contents of a chat. For example, the user of the user device 101 may select the chat mode through an interface, or preset the chat mode when initiating a chat using the user device 101 at first. The user device 101 may identify the chat mode that is selected or preset by the user.

Here, the chat mode may refer to an expression method regarding characters to express contents of a chat. For example, the chat mode may include a first chat mode in which three-dimensional (3D) characters are used, and a second chat mode in which the 3D characters are not used. The 3D characters are default characters expressed in a 3D form, and may correspond to the user device 101 and the counterpart device 103, respectively. The user device 101 and the counterpart device 103 may designate the 3D characters in advance of initiating a chat through a chat room.

The second chat mode refers to an existing chat mode in which 3D characters are not used. That is, the second chat mode may refer to a chat mode in which contents such as a text, an image, or a video is attached and displayed in a situation in which 3D characters are not displayed by default.

Meanwhile, although the first chat mode is selected, a background image of the chat room in which the contents of the chat is displayed may be a real image or a virtual image. For example, the real image may include a real-time image captured in real time through a camera of the user device 101, a still image of a predetermined object or place existing in reality, or a video replayed on the user device 101. Further, the real image may be a hologram image. In detail, in a case of an image replayed on the user device 101, the user device 101 may replay a still image of a predetermined object or place captured in reality, a slide including still images, or a video, irrespective of a current time or a current location of the user device 101. For example, although a video of the Status of Liberty captured in New York on July 30, 2014 is replayed on the user device 101 in Seoul on August 20, 2014, the video may be a real image.

The virtual image may include a still image or a video manufactured with respect to a virtual world and replayed on the user device 101. For example, the virtual image may refer to separately manufactured contents such as a game image or an animation, which does not exist in reality. The virtual image may be an image acquired by processing a real image. For example, the virtual image may be an image generated by three-dimensionally rendering a real image. The virtual image may be a hologram image virtually generated through a hologram device.

Meanwhile, in a case in which a background image of the chat room is a real image, when an object preset by the user is displayed on the background image, the 3D characters may be displayed on the object. That is, the object may be a marker to display the 3D characters in augmented reality. However, the message service method may be performed irrespective of presence of the marker.

Further, when displaying the 3D characters in a case in which the real image or the virtual image corresponds to a flat ground such as a desk or floor, the 3D characters may be displayed in a form as originally stored. However, in a case in which the real image or the virtual image does not correspond to a flat ground such as a desk or floor, the 3D characters may be displayed in a form with additional accessories such as "wings" such that the 3D characters may be displayed in a form of floating in the air. That is, the user device 101 may display, in the first chat mode, the originally stored 3D characters or display the 3D characters with additional accessories such as "wings" based on the background image of the chat room, thereby representing a space in which the 3D characters are present.

In a case in which the 3D characters are displayed in a real image or a virtual image which does not correspond to a flat ground, the user device 101 may additionally display a flat object at positions of the 3D characters.

The user device 101 may display the contents of the chat between the user device 101 and the counterpart device 103 in the chat room based on the chat mode. For example, in a case in which the first chat mode is selected, the 3D character corresponding to the user device and the 3D character corresponding to the counterpart device may express the contents of the chat, whereby the chat may be performed between the characters. The user device 101 and the counterpart device 103 may change the 3D characters based on a request.

While exchanging the contents of the chat in the chat room, the chat mode may switch between the first chat mode and the second chat mode in response to selection of the user. Then, the user device 101 may display the contents of the chat using characters determined based on a new chat mode.

The 3D characters described in FIG. 1 may be registered at the message server 102 directly or through a character server 104. In a case in which a message application program providing the message service method is installed in the user device 101, a default character that expresses preset default accessories, a default motion, or a default emotion may be provided. The default character may correspond to a 3D character.

However, to express accessories, a motion, or an emotion through the default character, the user device 101 may purchase a character sticker related to a visual effect to be applied to the 3D character. The visual effect may be related to the accessories, the motion, or the emotion.

A character sticker related to the accessories may be contents to change an appearance of the default character, for example, clothes, shoes, jewelry, or a body part such as eyes, a nose, a mouth, a chin, or eyebrows of the default character. For example, when the user device 101 purchases and selects a character sticker related to accessories such as "clothes", the user device 101 may apply a visual effect related to "clothes" to the default character.

A character sticker related to the motion may be contents to enable the default character to perform a motion other than the default motion for a preset time. For example, when the user device 101 purchases and selects a character sticker of "running", the user device 101 may apply a visual effect related to "running" to the default character for a preset time.

A character sticker related to the emotion may be contents to enable the default character to express an emotion other than the default emotion for a preset time. For example, when the user device 101 purchases and selects a character sticker of "joy", the user device 101 may apply a visual effect related to "joy" to the default character for a preset time.

In this example, character stickers related to accessories, motions, or emotions may be provided separately or in a form of combination. For example, a character sticker to express an emotion in a situation in which the 3D character is wearing accessories may express the accessories and the emotion in a form of combination. In another example, the 3D character wears on the accessories or is applied to the motion respectively.

In this example, the character sticker may be added or updated based on identification information or image information provided on-line or off-line.

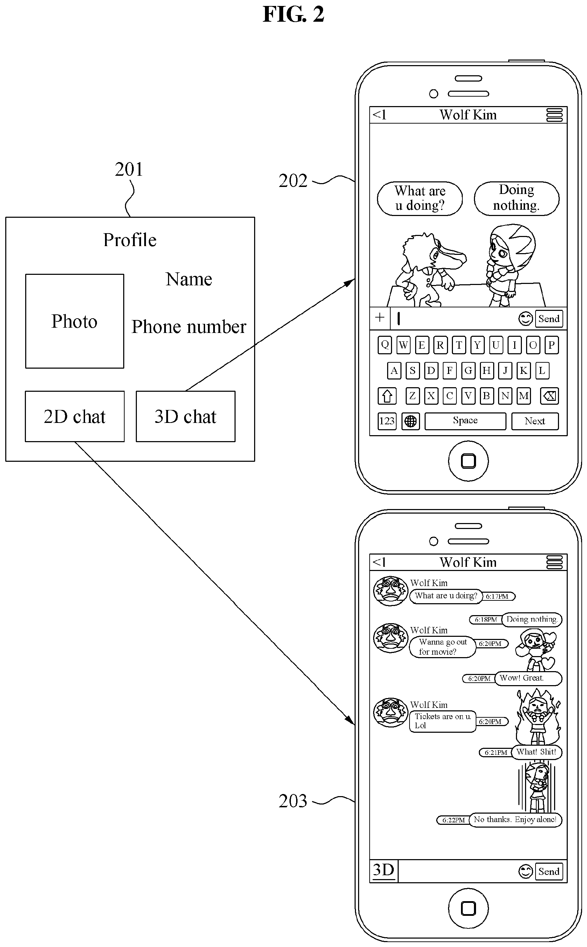

FIG. 2 illustrates a process of selecting a chat mode according to an embodiment.

A chat mode may be selected in various situations.

When one friend is selected in a friend list after a plurality of friends are displayed in the user device 101, a profile 201 of the friend may be displayed as shown in FIG. 2. In this example, a user may select a 3D chat for a first chat mode or a 2D chat for a second chat mode in the profile 201. When the user selects the 3D chat, the user device 101 may display contents of a chat through 3D characters in a chat room 202 based on the first chat mode. When the user selects the 2D chat, the user device 101 may display the contents of the chat through a text, an image, or a video without using 3D characters in a chat room 203 based on the second chat mode.

In a situation in which contents of a chat is transmitted and received somewhat, the user device 101 may provide an identifier displayed in a chat room such that the user may switch the chat mode. Here, the identifier may refer to an interface such as an icon or a button to instruct the user device 101 to switch between the first chat mode and the second chat mode.

In a situation in which contents of a chat is transmitted and received somewhat, the chat mode may be switched in response to a motion of the user applied to the user device 101 or a motion of the user applied to the display of the user device 101 that displays the chat room. For example, when the user performs a chat mode switching motion, for example, repeats tapping around the user device 101 or shaking the user device 101, the chat mode may be switched. When the user perform a chat mode switching motion, for example, drags or swipes the chat room displayed on the display of the user device 101, the chat mode may be switched.

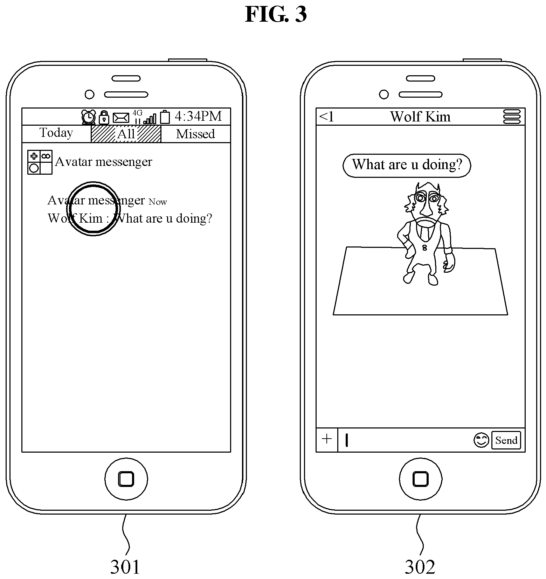

FIG. 3 illustrates a chat mode that represents a 3D character using a marker according to an embodiment.

An image 301 of FIG. 3 shows a situation in which a message including contents of a chat of the counterpart device 103 is transmitted to the user device 101. When the user selects the contents of the chat, the user device 101 may switch to a chat mode to display a real image or a virtual image as shown in an image 302 of FIG. 3. In this example, in a case in which a marker such as an object preset by the user is displayed in the real image or the virtual image displayed on the user device 101, a 3D character corresponding to the user device 101 or the counterpart device 103 may be displayed on the marker. In this example, the 3D character may be displayed in a chat room, as in augmented reality.

Meanwhile, when the message including the contents of the chat of the counterpart device 103 is selected in the image 301 of FIG. 3, the user device 101 may provide an interface to receive selection of one of a first chat mode in which 3D characters are displayed and a second chat mode in which the 3D characters are not displayed. For example, the user device 101 may display a "3D chat button" for selecting the first chat mode in which the 3D characters are displayed and a "2D chat button" for selecting the second chat mode in which the 3D characters are not displayed, thereby enabling the user to select a chat mode.

However, unlike the image 302 of FIG. 3, in a case in which an identified chat mode is the first chat mode and a marker is displayed in the real image or the virtual image, the user device 101 may display a 3D character on the marker in the chat room through augmented reality. Although the marker is not displayed in the real image or the virtual image, the user device 101 may display the 3D character in the chat room through augmented reality, irrespective of the marker. The user device 101 may determine a virtual image preset or selected by the user to be a background image of the chat room, rather than the real image.

Based on a user request for entry to the chat room, the 3D character may be displayed by default through augmented reality as shown in the image 302 of FIG. 3. For this, in response to the user request for entry to the chat room, the user device 101 may control the camera to be turned on. By displaying the 3D character in the chat room with a background of a real image or a virtual image, the 3D character may be expressed through augmented reality. Then, the contents of the chat between the user device 101 and the counterpart device 103 may be displayed through the 3D character of the user device 101 and a 3D character of the counterpart device 103 expressed through augmented reality.

In this example, in a case in which a pre-designated object or a motion of the object is sensed in the real image or the virtual image, the user device 101 may display the 3D character in the chat room. Here, the object may act as a marker to display the 3D character through augmented reality. In a case in which a pre-designated object such as a business card placed on a desk is displayed in the real image or the virtual image as shown in the image 302 of FIG. 3, the 3D character may be displayed on the object.

However, in an example, the 3D character may be displayed irrespective of the presence of the object or the motion of the object. That is, when the user enters the chat room, the user device 101 may display, depending on a situation, the 3D character in the chat room through augmented reality corresponding to a situation in which a marker is present or augmented reality corresponding to a situation in which a marker is absent, and display the contents of the chat between the user device 101 and the counterpart device 103 through the 3D characters thereof.

Meanwhile, although the contents of the chat is displayed by default using the 3D characters through augmented reality, the user device 101 may switch to a chat mode in which the 3D characters are not used based on a user request. Further, based on a user request, the user device 101 may switch again from the chat mode in which the 3D characters are not used to a chat mode in which the 3D characters are used through augmented reality.

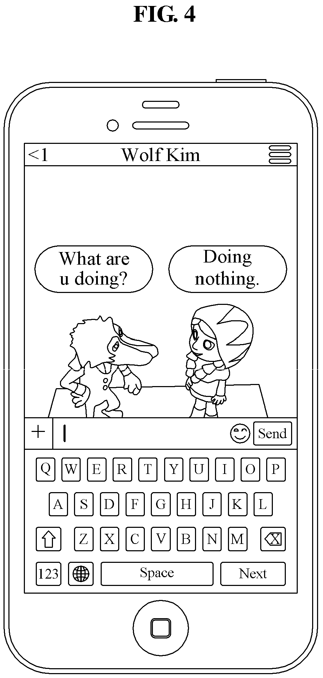

FIG. 4 illustrates a process of displaying contents of a chat using 3D characters according to an embodiment.

Referring to FIG. 4, a 3D character corresponding to the user device 101 and a 3D character corresponding to the counterpart device 103 may be displayed in a chat room based on a first chat mode. Contents of a chat input from the user device 101 and the counterpart device 103 may be displayed using the 3D characters.

In FIG. 4, the contents of the chat may be displayed through speech bubbles connected to the 3D characters. In this example, the speech bubbles may disappear over time. In another example, the speech bubbles may be continuously displayed although time passes such that the contents of the chat may be replayed through the user device 101 or the counterpart device 103.

Each time the contents of the chat is displayed, the 3D characters may perform a predetermined motion, for example, shake a hand, wink, or shake a head.

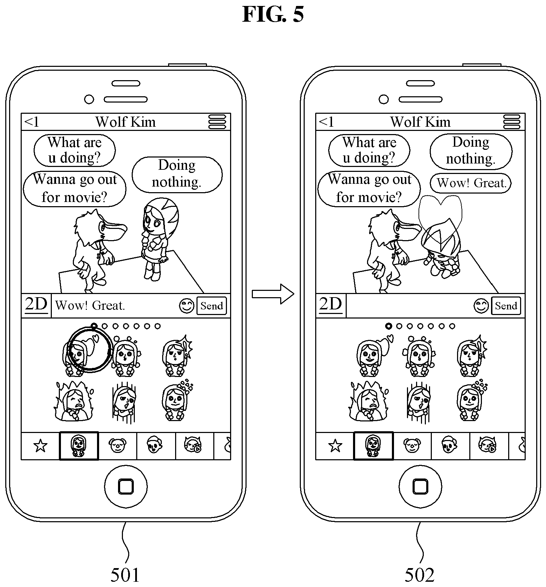

FIG. 5 illustrates a process of applying a visual effect to a 3D character according to an embodiment.

Referring to an image 501 of FIG. 5, a 3D character displayed in a chat room in a first chat mode may be a default character set by a user. The default character may be a 3D character that expresses a predetermined emotion or motion.

As shown in the image 501 of FIG. 5, an interface to select a character sticker related to a visual effect of accessories, a motion, or an emotion to be applied to the default character may be provided in a portion of a region of the chat room. Here, the interface may be displayed to overlap the portion of the region of the chat room. The interface may be provided by selecting a button or an icon displayed in the chat room.

The character sticker may be related to a visual effect to be applied to a 3D character which is the default character. When the user selects the character sticker provided through the interface, the visual effect corresponding to the character sticker may be applied to and expressed by the default character as shown in an image 502 of FIG. 5.

The character sticker may be transferred or given as a gift. For example, the character sticker purchased by the user device 101 may be transferred or given as a gift to the counterpart device 103 or a device of a third party.

The character sticker may be continuously added or updated through an on-line or off-line purchase or activity of the user. Hereinafter, an example of the on-line or off-line purchase or activity of the user will be described. For example, it may be assumed that there is an event of providing a dinosaur character to a customer who visits a dinosaur theme park or orders a hamburger at a restaurant in the theme part.

When the user visits the theme part or orders a hamburger at the restaurant, an actual dinosaur character may be given as a gift to the user. Further, identification information, for example, a serial number, related to the dinosaur character or image information, for example, an image, related to the dinosaur character may be displayed in various regions such as a ticket purchased to enter the theme park, a pamphlet of the theme park received at the entrance, a structure installed at a designated place of the theme park, a receipt for the hamburger, a coupon provided along with the hamburger, or a wrapping paper of the hamburger. The identification information or the image information may also be displayed on the dinosaur character.

In a case in which the user registers the identification information or the image information on a page provided by the message server 102 or the character server 104, the dinosaur character or the character stickers related to the dinosaur character may be displayed in the interface provided through the chat room of the message application program of the user. In this example, to register the identification information or the image information, the user may access the page provided by the message server 102 or the character server 104 through the user device 101 or another device.

In another example, in a case in which the user registers an identification or a phone number for the message application program when entering the theme park or ordering a hamburger, the dinosaur character or the character stickers related to the dinosaur character may be automatically displayed in the interface provided through the chat room of the message application program of the user.

Meanwhile, in a case in which the user joins a predetermined on-line site, or performs an activity on-line, for example, purchases a product or participates in an event, the corresponding site may provide identification information or image information related to a preset character. By registering the identification information or the image information at the message server 102 or the character server 104, the user may use character stickers related to the character corresponding to the identification information or the image information in the message application program.

The character stickers may be expressed differently based on a current chat mode. For example, in a case in which the current chat mode is the first chat mode as shown in the image 501 of FIG. 5, the user device 101 may apply a visual effect related to a character sticker selected by the user to the default character. However, in a case in which the current chat mode is the second chat mode, the user device 101 may display the character sticker selected by the user in the chat room. In this example, in the second chat mode, the character sticker selected by the user may correspond to a result of reflecting the visual effect in a 2D character associated with the 3D character.

Character stickers may be generated by the character server 104 and registered at the message server 102. The user may purchase a character sticker related to a visual effect such as accessories, an emotion, or a motion through a purchase page provided by the message server 102. The purchased character sticker may be identified differently for each user in the message server 102.

In a case in which the user device 101 purchases a character sticker A and applies the character sticker A to the default character, the counterpart device 103 may display, in the chat room, the 3D character of the user device 101 to which a visual effect related to the character sticker A is applied although the counterpart device 103 does not purchase the character sticker A.

The character sticker may be used to express a visual effect to be applied to the 3D character and a visual effect applied to the 2D character associated with the 3D character. Thus, the character sticker purchased by the user may be shared in the first chat mode and the second chat mode.

In a case of applying a character sticker in the first chat mode, a character sticker expressing a visual effect related to accessories may be applied to the default character semi-permanently. A character sticker expressing a visual effect related to an emotion or a motion may be applied to the default character temporarily.

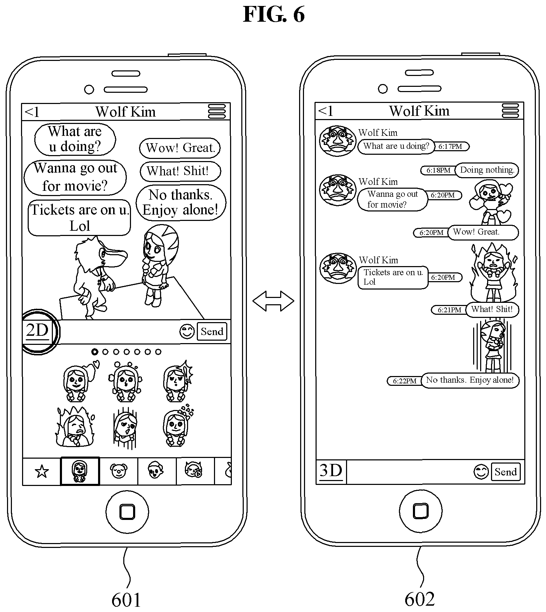

The character stickers applied in the first chat mode may be stored as history in a time order. In a case in which the chat mode is switched from the first chat mode to the second chat mode, the character stickers used in the first chat mode may be displayed in the chat room of the second chat mode in a time order as they were used. This example will be described in detail with reference to FIG. 6.

FIG. 5 illustrates a process in which the user selects a character sticker directly in the interface including character stickers to apply a visual effect related to a desired emotion or motion to the 3D character. However, embodiments are not limited thereto. In a case in which the user inputs a preset word, symbol, or number corresponding to the character sticker into a chat input box, the user device 101 may determine the character sticker corresponding to the input word, symbol, or number, and apply the visual effect related to the emotion or motion to be expressed by the character sticker to the 3D character.

For example, the user may input "^^". In a case in which "^^" is registered at the user device 101 or a messenger server 102 to be mapped to a character sticker related to joy, the user device 101 may display, in the chat room, the 3D character to which an emotion of joy or a motion related to joy to be expressed by the character sticker corresponding to the input "^^"is applied.

Consequently, a character sticker may be selected by a user from character stickers provided through an interface, or selected when the user inputs a combination of at least one of a word, a number, or a symbol corresponding to the character sticker into a chat input box. Then, the user device 101 may display, in a chat room, a 3D character to which a visual effect of an emotion or motion corresponding to the selected character sticker is applied.

FIG. 6 illustrates a process of switching from a first chat mode to a second chat mode according to an embodiment.

Referring to an image 601 of FIG. 6, a process of displaying contents of a chat in a chat room through 3D characters based on a first chat mode is illustrated. In this example, an identifier, for example, "2D button", related to switching from the first chat mode to a second chat mode may be displayed in the chat room. When a user selects the identifier, the chat room may switch from the first chat mode to the second chat mode as shown in the image 601 of FIG. 6. Although the image 601 of FIG. 6 illustrates a case in which the contents of the chat is displayed through the 3D characters in the chat room, an image 602 of FIG. 6 illustrates a case in which the contents of the chat is displayed through a text, an image, or a video, rather than using 3D characters, in the chat room.

In a case in which the user device 101 requests switching of a chat mode, the counterpart device 103 may or may not switch the chat mode. For example, in a case in which the user device 101 requests switching to the second chat mode while the user device 101 and the counterpart device 103 chat in the first chat mode, the counterpart device 103 may maintain the first chat mode, or may switch to the second chat mode in response to the switching request of the user device 101.

Meanwhile, as shown in the image 602 of FIG. 6, a visual effect applied through a character sticker to a 3D character in the first chat mode may be identically applied to the second chat mode. In detail, character stickers selected in the first chat mode may be displayed in the second chat mode in a time order as they were selected. In a case of the second chat mode, a character sticker corresponds to a result of applying a visual effect to a 2D character associated with the 3D character.

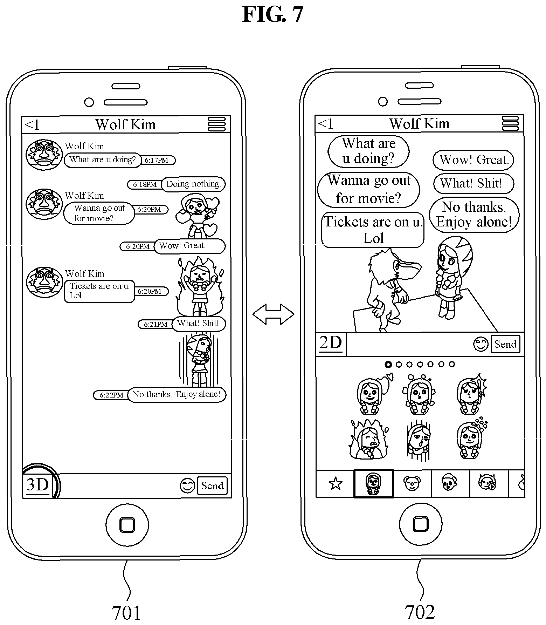

FIG. 7 illustrates a process of switching from a second chat mode to a first chat mode according to an embodiment.

Referring to an image 701 of FIG. 7, an identifier, for example, "3D button", related to switching from a second chat mode to a first chat mode may be displayed in a chat room. When a user selects the identifier, the user device 101 may display contents of a chat through 3D characters based on the first chat mode. In this example, a visual effect of a character sticker selected in the second chat mode may not be applied to a 3D character displayed in the first chat mode. However, the contents of the chat displayed in the second chat mode may be displayed through speech bubbles of 3D characters in a form of history in a time order.

Referring to an image 702 of FIG. 7, a process of performing a chat between 3D characters in response to switching from the 2D second chat mode to the 3D first chat mode is illustrated. As shown in the image 702 of FIG. 7, a character sticker applied to a 3D character unlike a character sticker applied to a 2D character of the second chat mode may be displayed.

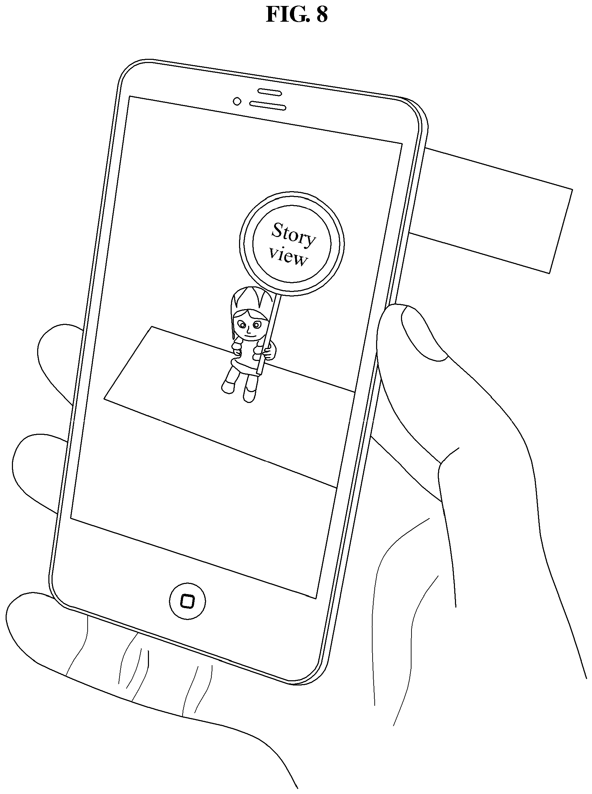

FIG. 8 illustrates a process of replaying contents of a chat according to an embodiment.

When the user device 101 and the counterpart device 103 leave a chat room, the user device 101 may store contents of a chat in the chat room. Here, leaving the chat room may refer to a case of closing a message application program, executing another application, or ending the chat.

Later, a user may request replaying of the contents of the chat with the counterpart device 103. In this example, as shown in FIG. 8, a replaying identifier, for example, "story view" may be displayed in relation to a 3D character. When the user selects the replaying identifier, the contents of the chat with the counterpart device 103 may be replayed through 3D characters based on the first chat mode in a time order. Here, the 3D characters may be 3D characters corresponding to the user device 101 and the counterpart device 103 involved in the chat. While replaying the contents of the chat, a visual effect corresponding to a character sticker selected in a predetermined time may also be applied to a 3D character and displayed along together.

Although not shown in FIG. 8, the user may transmit a profile viewing request related to the user device 101 or the counterpart device 103. Then, the user device 101 may display a 3D character corresponding to the user device 101 or the counterpart device 103 for which the profile viewing request is transmitted. The 3D character may be controlled to describe personal information of the user device 101 or the counterpart device 103 or to express a predetermined emotion or motion.

The above-described embodiments of the present invention may be recorded in computer-readable media including program instructions to implement various operations embodied by a computer. The media may also include, alone or in combination with the program instructions, data files, data structures, and the like. The program instructions stored in the media may be specially designed and configured for the present invention, or may be known to those skilled in the art and thereby be implemented.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A message service method performed by a user device, the message service method comprising:
identifying a chat mode related to a method of expressing contents of a chat; and
displaying, in a chat room, contents of a chat between the user device and a counterpart device based on the chat mode,
wherein the chat mode comprises a first chat mode in which three-dimensional (3D) characters corresponding to the user device and the counterpart device are used, and a second chat mode in which the 3D characters are not used.

2. The message service method of claim 1, wherein the displaying comprises:
providing, in the first chat mode, an interface including a character sticker related to a visual effect to be applied to the 3D characters; or
providing, in the second chat mode, an interface including a character sticker related to a visual effect applied to two-dimensional (2D) characters associated with the 3D characters.

3. The message service method of claim 1, wherein the displaying comprises:
applying, in the first chat mode, a visual effect corresponding to a selected character sticker to a 3D character in the chat room; and
displaying, in the second chat mode, the selected character sticker in the chat room.

4. The message service method of claim 2, wherein the character sticker is added or updated based on identification information or image information of a character, and is selected by a user from character stickers provided through the interface or selected when the user inputs a combination of at least one of a word, a number, or a symbol corresponding to the character sticker into a chat input box.

5. The message service method of claim 1, further comprising:
switching between the first chat mode and the second chat mode when a chat mode switching identifier displayed in the chat room is selected or a chat mode switching motion of a user is recognized,
wherein the identifying comprises identifying a new chat mode.

6. The message service method of claim 1, wherein the displaying comprises displaying the contents of the chat in a chat room with a background of a real image or a virtual image that is preset or determined based on selection of a user when the first chat mode is selected.

7. The message service method of claim 1, further comprising:
storing the contents of the chat in the chat room when the user device and the counterpart device leave the chat room;
displaying the 3D characters corresponding to the user device and the counterpart device and a replaying identifier based on a replaying request for the contents of the chat; and
replaying the contents of the chat in a time order based on the first chat mode when the replaying identifier is selected.

8. The message service method of claim 1, further comprising:
displaying a 3D character corresponding to the user device or the counterpart device based on a profile viewing request related to the user device or the counterpart device; and
controlling the corresponding 3D character to describe personal information of the user device or the counterpart device or express a predetermined emotion or motion.

9. A message application program for a message service method, the message application program stored in a medium of a user device and executed by a processor of the user device, the message application program comprising:
identifying a chat mode related to a method of expressing contents of a chat; and
displaying, in a chat room, contents of a chat between the user device and a counterpart device based on the chat mode,
wherein the chat mode comprises a first chat mode in which three-dimensional (3D) characters corresponding to the user device and the counterpart device are used, and a second chat mode in which the 3D characters are not used.

10. The message application program of claim 9, wherein the displaying comprises:
providing, in the first chat mode, an interface including a character sticker related to a visual effect to be applied to the 3D characters; or
providing, in the second chat mode, an interface including a character sticker related to a visual effect applied to two-dimensional (2D) characters associated with the 3D characters.

11. The message application program of claim 10, wherein the displaying comprises:
applying, in the first chat mode, a visual effect corresponding to a selected character sticker to a 3D character in the chat room; and
displaying, in the second chat mode, the selected character sticker in the chat room.

12. The message application program of claim 9, further comprising:
switching between the first chat mode and the second chat mode when an identifier displayed in the chat room is selected,
wherein the identifying comprises identifying a new chat mode.

13. The message application program of claim 9, wherein the displaying comprises displaying the contents of the chat in a chat room with a background of a real image or a virtual image that is preset or determined based on selection of a user when the first chat mode is selected.

14. The message application program of claim 9, further comprising:
storing the contents of the chat in the chat room when the user device and the counterpart device leave the chat room;
displaying the 3D characters corresponding to the user device and the counterpart device and a replaying identifier based on a replaying request for the contents of the chat; and
replaying the contents of the chat in a time order based on the first chat mode when the replaying identifier is selected.

15. The message service method of claim 9, further comprising:
displaying a 3D character corresponding to the user device or the counterpart device based on a profile viewing request related to the user device or the counterpart device; and
controlling the corresponding 3D character to describe personal information of the user device or the counterpart device or express a predetermined emotion or motion.

16. A user device, comprising:
a processor configured to identify a chat mode related to a method of expressing contents of a chat; and
a display configured to display, in a chat room, contents of a chat between the user device and a counterpart device based on the chat mode,
wherein the chat mode comprises a first chat mode in which three-dimensional (3D) characters corresponding to the user device and the counterpart device are used, and a second chat mode in which the 3D characters are not used.

17. The user device of claim 16, wherein the chat mode is switched between the first chat mode and the second chat mode when a chat mode switching identifier displayed in the chat room is selected or a chat mode switching motion of a user is recognized.

18. A message service method performed by a user device, the message service method comprising:
displaying three-dimensional (3D) characters in a chat room with a background of a real image or a virtual image based on a request for entry to the chat room; and
displaying contents of a chat between the user device and a counterpart device using the 3D characters.

19. The message service method of claim 18, wherein the displaying of the 3D characters comprises displaying the 3D characters in the chat room when a pre-designated object or a motion of the object is sensed in the real image or the virtual image.

20. The message service method of claim 18, further comprising:
switching a chat mode when a chat mode switching identifier displayed in the chat room is selected or a chat mode switching motion of a user is recognized,
wherein the displaying comprises displaying the contents of the chat without using the 3D characters based on a new chat mode.

21. The message service method of claim 18, wherein the displaying comprises providing an interface including a character sticker related to a visual effect to be applied to the 3D characters.

22. The message service method of claim 21, wherein the character sticker is added or updated based on identification information or image information of a character, and is selected by a user from character stickers provided through the interface or selected when the user inputs a combination of at least one of a word, a number, or a symbol corresponding to the character sticker into a chat input box.

23. A message application program for a message service method, the message application program stored in a medium of a user device and executed by a processor of the user device, the message application program comprising:
displaying three-dimensional (3D) characters in a chat room with a background of a real image or a virtual image based on a request for entry to the chat room; and
displaying contents of a chat between the user device and a counterpart device using the 3D characters.
